# EUROPEAN PATENT SPECIFICATION

(11) **EP 2 916 490 B1**
(45) Date of publication and mention of the grant of the patent: **11.10.2017**
(21) Application number: 15157654.3
(22) Date of filing: 04.03.2015
(51) Int. Cl.: H04L 12/28, H04W 40/00

(54) **HOME AUTOMATION SYSTEM**
HAUSAUTOMATIONSSYSTEM
SYSTÈME DE DOMOTIQUE

(30) Priority: 04.03.2014 IT MI20140332
(43) Date of publication of application: 09.09.2015
(73) Proprietor: Microbees Technology Ltd., London SE1 2RE (GB)
(72) Inventor: Mirabile, Carmelo, 81030 PARETE (IT)
(74) Representative: Bernotti, Andrea

(56) References cited:
- US-A1- 2006 002 366
- US-A1- 2007 248 047

## Description

The present invention relates to a home automation system.

Recent technological developments, both in the fields of sensors and of telecommunications, have greatly expanded the possibilities of controlling home electrical and electronic equipments. In particular, many devices can now process and communicate with remote devices, which are in turn able to implement control functions. This is how home automation systems, taking advantage of the possibilities offered by mobile phone networks and data networks, can manage several utilities through mobile devices, such as Smartphones or tablets, as well as from fixed remote locations. Among the many examples, it is possible to control the switching on and off of parts of lighting systems and of heating systems, possibly by setting certain parameters (times, lighting intensity, temperature, etc.), to select and activate programs of appliances, to record TV programs, to monitor power consumption, to demand and receive messages about the equipment status.

In some cases, only a direct connection with the controlled equipment (like some thermostats) is possible. However, the equipment is increasingly integrated in a local network (LAN, Local Area Network) and the communication with the remote control device is carried out through a single point of access to a wide area network (WAN, Wide Area Network), typically the Internet.

However, the connection to local area networks has some problems, in particular with regard to the procedures for the installation of new devices, which sometimes require skills not available to many users, and the necessary resources. In particular, these latter must be sufficient to ensure a simple and flexible access to the local network from all the points where the equipment could be used. Such a requirement is not always easy to meet, both in the case of wireless connections, and, more so, in the case of cable connections. In fact, even at home, signal repeaters must be often installed to overcome the obstacles caused by the shape of the premises in order to adequately cover the entire exploitable area. The installation of not strictly necessary devices, if compared with the normal needs of the user, in any case entails an additional cost that should be preferably avoided or minimized as much as possible. Moreover, a significant cost is associated also to devices that must be employed to ensure the necessary processing and storage ability to handle the communication via the normal protocols.

US 2006/002366 A1 discloses a home automation system comprising a plurality of nodes coupled in communication to one another by a wireless connection so as to form a local area network. A central node connects to a wide area network, whereas peripheral nodes operate as senders of direct messages addressed to the central node, in a first operating mode, and as repeaters of direct messages, in a second operating mode. Peripheral nodes are identified by a respective network identifier. Peripheral nodes are connected to the central node through one or more further repeater peripheral nodes, functioning in the second operating mode. Direct messages comprise network identifiers containing information relating to a direct path between a sender peripheral node, functioning in the first operating mode, and the central node. Peripheral node route along the direct preferential path received direct messages.

The object of the present invention is therefore to provide a home automation system which allows to overcome or at least mitigate the described limitations.

According to the present invention, it is provided a home automation system as defined in claim 1.

The present invention will now be described with reference to the accompanying drawings, which illustrate a non-limitative embodiment, wherein:
- Figure 1 is a simplified block diagram of a home automation system according to an embodiment of the present invention;
- Figure 2 is a graph illustrating connections in a portion of the home automation system of Figure 1;
- Figures 3-5 are more detailed block diagrams of respective components of the home automation system of Figure 1;
- Figures 6 and 7 are schematic illustrations of portions of memory of components of the home automation system of Figure 1;
- Figure 8 is a schematic view of the structure of a message used in the home automation system of Figure 1;
- Figure 9 is a simplified flow chart of a first procedure carried out in the home automation system of Figure 1;
- Figure 10 is an example of a message used in the home automation system of Figure 1;
- Figure 11 is a simplified flow chart of a second procedure carried out in the home automation system of Figure 1;
- Figures 12-15 are further examples of messages used in the home automation system of Figure 1; and
- Figures 16 and 17 are simplified flow diagrams, respectively of a third procedure and of a fourth procedure carried out in the home automation system of Figure 1.

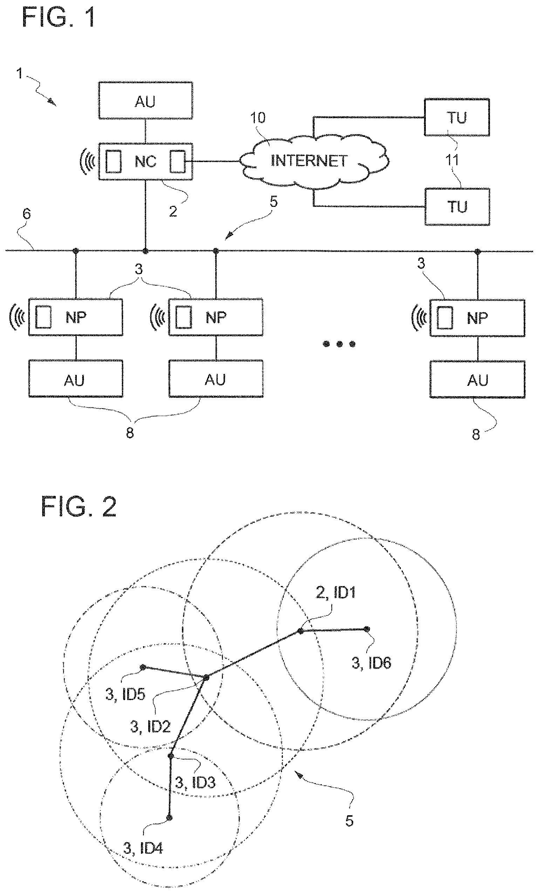

In Figure 1, a home automation system according to an embodiment of the present invention is indicated in its entirety with the reference number 1 and comprises a central node 2 and a plurality of peripheral nodes 3, coupled to the central node 2 by a wireless connection, directly or through further peripheral nodes 3, in order to form a single local area network 5.

The central node 2 and the peripheral nodes 3 are coupled to a supply line 6 (e.g. a distribution network of electric energy that provides a nominal voltage under standard conditions, normally 220 V at 50 Hz or 110 V at 60 Hz), and to respective user appliances 8. The central node 2 and the peripheral nodes 3 are configured to provide information about the status of the respective user appliance 8 (e.g. current fuel consumption, or on/off/hold condition) and to set or change the status of the respective user appliance 8 (e.g. to connect the user appliance 8 to the supply line 6 or to set a program), in response to commands given by a user.

Moreover, the central node 2 and the peripheral nodes 3 are coupled by a wireless connection based on a local area network protocol that will be described in detail below. The central node 2 and the peripheral nodes 3 may be located in different rooms of a building, for example inside a house. As illustrated in Figure 2, all peripheral nodes 3 are coupled to the central node 2 directly, if their distance is less than the respective radio coverage area, or indirectly, through additional peripheral nodes 3 acting as bridges or repeaters, if not. In Figure 2, the ranges of the peripheral nodes 3 and of the central node 2 are schematically represented by circles centred on the respective nodes 2, 3.

The central node 2 is configured for a bidirectional communication with the peripheral nodes 3 and, through a wide area network 10, typically the Internet, with one or more user terminals 11 available to a user to interact with the home automation system 1 (e.g. a Smartphone, a tablet, a laptop or a personal computer).

In particular, the central node 2 receives and routes instructions and commands from the user terminals 11 to recipient peripheral nodes 3; and forwards to the user terminals 11 status messages sent by the peripheral nodes 3 in response to specific instructions or monitoring and safety procedures. The central node 2 may be the recipient of commands and instructions for the respective user appliance 8, as well as the source of status messages for the user terminals 11.

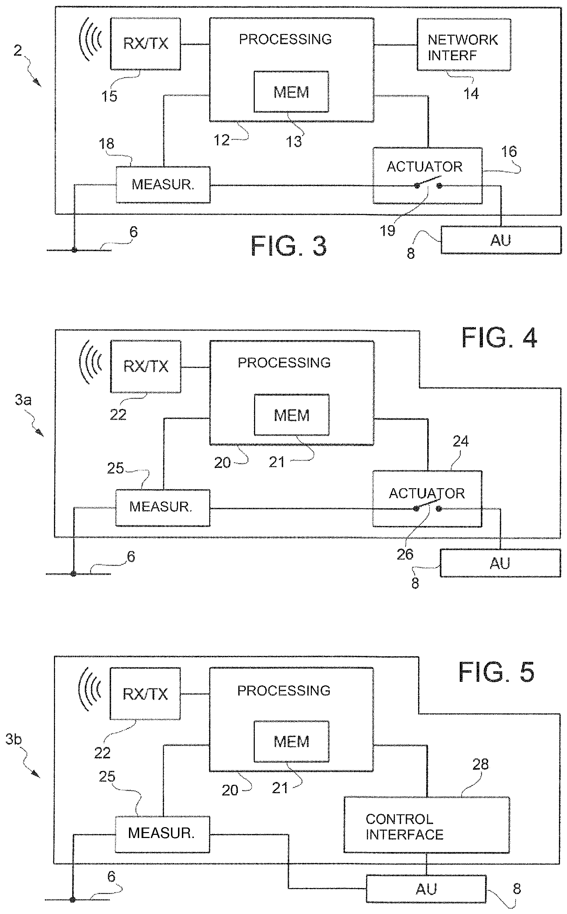

With reference to Figure 3, the central node 2 comprises a processing unit 12, a memory module 13, a network interface 14, a wireless transceiver module 15, an actuator 16 and a power metering device 18.

The processing unit 12 communicates with the user terminals 11 through the network interface 14 and the wide area network 10, and with the peripheral nodes 3 through the wireless transceiver module 15, using the local area network protocol. Furthermore, the processing unit 12 is configured to operate the actuator 16 and to measure the absorbed power through the power metering device 18.

In one embodiment, the memory module 13 may be incorporated in the processing unit 12. Thanks to the local area network protocol that will be described below, which requires minimal resources, the capacity of the memory module 13 can even be very small, for example 2 kB.

The network interface 14 enables connection of the central node 2 to the wide area network 10 and may include, for example, a network card connected to a modem or router via a conventional wired or wireless communication protocol. Alternatively, the connecting device may comprise a modem or a router directly connected to the wide area network 10.

The wireless transceiver module 15 is connected to the processing unit 12 and allows a bidirectional communication with the peripheral nodes 3. In one embodiment, the wireless transceiver module 15 uses a band of frequencies centred at 433 MHz, which is advantageous with regard to obstacle immunity and width of radio coverage area.

In one embodiment, the actuator 16 comprises a switch 19 arranged between the supply line 6 and the user appliance 8. The switch 19 may be actuated by the processing unit 12 to alternately start and stop the power supply to the user appliance 8 coupled to the central node 2.

The power metering device 18, in response to a command provided by the processing unit 12, measures the electrical power absorbed by the user appliance 8 connected to the central node 2.

Figure 4 illustrates a simplified block diagram of one of the peripheral nodes 3, in particular a peripheral node 3a including a processing unit 20, a memory module 21, here incorporated in the processing unit 20, a wireless transceiver module 22 (using the bandwidth at 433 MHz), an actuator 24 and a power metering device 25.

The processing unit 20 is configured to communicate with the central node 2 directly or through further peripheral nodes 3 and is provided with communication and control functions to implement the local area network protocol and to carry out the commands received from the central node 2. In particular, the processing unit 20 controls the actuator 24, which in this case comprises a switch 26 arranged between the power supply line 6 and the user appliance 8 associated with the peripheral node 3a, and, by using the power metering device 25, detects the power absorbed by said appliance.

A different peripheral node 3, in particular a peripheral node 3b shown in Figure 5, may comprise a control interface 28 instead of a simple actuator. The control interface 28 may be coupled in communication to a control unit (not shown) of the user appliance 8 to determine its status and to set up programs of use.

Advantageously, the central node 2 and the peripheral nodes 3 may be incorporated in power outlets or adapters interposed between the supply line 6 and the respective user appliances 8.

The processing unit 12 of the central node 2 and the processing units 20 of the peripheral nodes 3 perform procedures of initialization, identification of preferential paths, heartbeat, message reception, message sending and message routing.

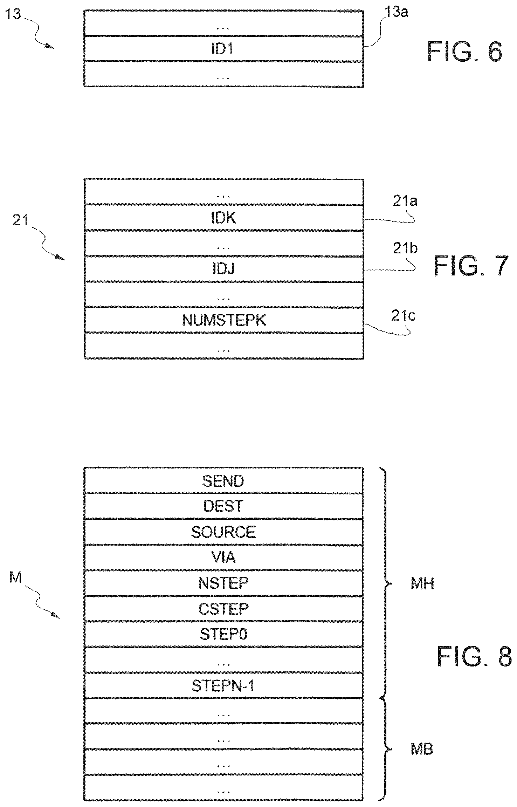

The memory module 13 of the processing unit 12 of the central node 2 has an identifying register 13a (Figure 6) storing a reserved network identifier ID1, which identifies only the central node 2 and is not available to identify peripheral nodes 3. Here and hereinafter, the term "register" will be generically used to designate a portion of the memory module 13 or of one of the memory modules 21, intended for temporarily or permanently storing a specific type of information. In particular, this term may indicate either an element of a bank of registers or one or more cells of volatile or non-volatile memory.

In each processing unit 20 of the peripheral nodes 3, the memory module 21 has (Figure 7): an identifying register 21a, storing a respective network identifier IDK that is assigned during an initialization procedure (the index K being generically used here and hereinafter to designate one of the peripheral nodes 3 present in the home automation system 1); a routing register 21b, storing the network identifier IDJ of the peripheral node 3 defining the routing node, namely the first step in a preferential path to the central node 2; and a step number register 21c, storing the NUMSTEPK, the number of steps needed to reach the central node 2.

As previously mentioned, some of the peripheral nodes 3 are in direct communication with the central node 2, while others, out of the radio coverage area, need further peripheral nodes 3 operating as repeaters to reach the central node 2. The number of routing steps stored in the routing register 21c represents the number of additional peripheral nodes 3 needed to reach the central node 2. The preferential path is the path from a peripheral node 3 to the central node 2 comprising the smallest number of routing steps and, with a same number of routing steps, the best signal level in the first routing step.

The network protocol used by the home automation system 1 is based on messages M.

The processing units 12, 20 are configured to generate, transmit, receive and process messages M (Figure 8). The messages M are transmitted in broadcast mode, i.e. messages M transmitted from any of the nodes 2, 3 are received by all nodes 2, 3 in the coverage field.

Each message M includes a header MH and a body MB, as shown in Figure 8.

The header MH has fixed length and includes:
a sender field SEND, containing the identifier of the node 2, 3, original sender of the message M;
a recipient field DEST, containing the network identifier of the node 2, 3, recipient of the message M;
a transmitter field SOURCE, containing the identifier of the node 2, 3 that is transmitting the message M;
a routing field VIA, containing the identifier of the node 2, 3 forming the first step of the preferential path of the transmitter peripheral node 3 (which may be the sender or a repeater node);
a step number field NSTEP, containing the number of routing steps between the sender or transmitter node 2, 3 that is transmitting the message M and the node 2, 3, recipient of the message M;
a current step field CSTEP, containing an indication about the current routing step in the path between the original node 2, 3 and the recipient node 2, 3;
a plurality of ordered path step fields STEP0, ..., STEPN-1, indicating in a sequence the identifiers of the nodes 2, 3 defining the routing steps between the node 2, 3 sender of the message and the node 2, 3 which is transmitting the message M.

The header MH may contain additional fields for additional parameters defining the characteristics of the body MB of the message M (e.g. size, data type, number of parameters). In one embodiment, the header MH has a 16 bytes size.

The body MB of the message M has a variable size up to a maximum, for example, of 48 bytes. In this way, the size of each message M cannot exceed 64 bytes.

The body MB may contain, for example, instructions, status information, measurement data, configuration information.

The processing units 12, 20 are configured to generate, transmit, receive and interpret messages M and perform actions in response to the interpretation of each message M.

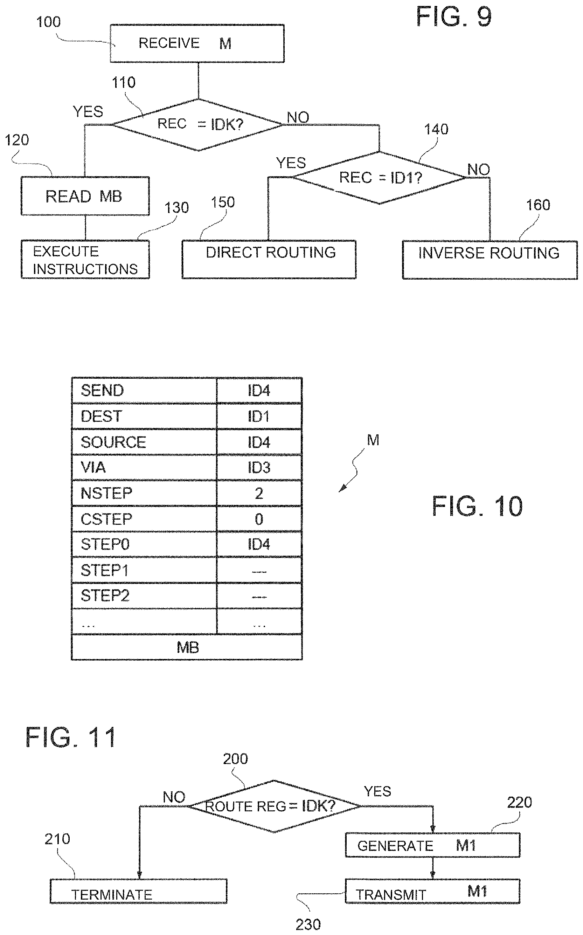

Figure 9 illustrates an example of a communication procedure carried out by the processing units 12, 20. Figure 9 refers to the processing unit 20 of a generic peripheral node 3 identified by the network identifier IDK. The processing units of the central node 2 and of the other peripheral nodes 3 carry out the same communication procedure.

The communication procedure is enabled in response to the reception of a message M (block 100), for example using an interrupt mechanism or by periodic interrogation of the wireless transceiver module 15.

The processing unit 20 compares the identifier contained in the recipient field DEST of the message M with the network identifier IDK recorded in its memory module 13 (block 110).

If the content of the recipient field DEST of the message M coincides with the network identifier IDK (block 110, output YES), the processing unit 20 reads the body MB of the message M (block 120) and carries out the instructions it contains (block 130).

Otherwise (block 110, output NO), the processing unit 20 carries out a direct routing procedure (block 150), if the message M is directed to the central node 2 (block 140, output YES), or a reverse routing procedure (block 160), if the message M is directed to a peripheral node (block 140, output NO).

The direct and reverse routing procedures will be described below with reference to the illustrative scheme shown in Figure 2, which illustrates a portion of the home automation system 1 in a possible operating configuration. In particular, Figure 2 shows the central node 2 to which the network identifier ID1 is associated, and five peripheral nodes 3, with their respective identifiers ID2-ID6.

In a case provided by way of example, the peripheral node 3 identified by the network identifier ID4 uses the direct routing procedure to send a message M to the central node 2 through the preferential path defined by the peripheral nodes to which the identifiers ID3 and ID2 are associated.

The communication procedure involves the generation and transmission of the message M.

The processing unit 20 of the sender peripheral node 3 generates the header MH of the message M as shown in Figure 10. Specifically, the processing unit 20 inserts:
its network identifier ID4 in the sender field SEND;
the identifier of the recipient node 2, 3 in the recipient field DEST (in this case the network identifier ID1 to designate the central node 2);
its network identifier ID4 in the transmitter field SOURCE (at this stage, sender node and transmitter node coincide);
the content of routing register 21b in the routing field ROUTE (i.e. the identifier contained in the routing register 21b, which defines the first step of the preferential path, in this case, the network identifier ID3);
the number of necessary routing steps to reach the central node 2 in the step number field NSTEP (i.e. the content of the step number field 21c of its memory module 21; in this case two steps are required);
an initial value, for example "0", in the current step field CSTEP;
its network identifier ID4 in the first path step field STEP0;
the content of the routing register 21b in the second path step field STEP1 (in this case, the network identifier ID3).

Other path step fields STEP2, ..., STEPN-1 remain empty.

The used path step fields STEP2, ..., STEPN-1 define a stack ST whose elements are identifiers IDK that indicate peripheral nodes 3 forming successive steps of the preferential path of direct routing from the sender peripheral node 3 to the central node 2.

The message M is transmitted in broadcast mode and is therefore received by all nodes 2, 3 in the radio coverage area. The recipient peripheral nodes 3 recognize that they are not the recipients of the message M (Figure 9, block 110) and start the direct routing procedure (Figure 9, block 120).

More precisely, the processing units 20 of the recipient peripheral nodes 3 compare the content of the routing field VIA of the message M with the network identifier IDK contained in their routing register 21b (Figure 11, block 200). If the contents are different (block 200, output NO), the routing procedure ends (block 210). For the peripheral node 3 that defines the first step of the preferential path and must work as a repeater for the sender node (in this case the peripheral node 3 to which the network identifier ID3 is associated), the comparison has a positive outcome because the contents are equal (block 200, output YES). The processing unit 20 of the peripheral node 3 operating as a repeater generates a new message M1, derived from the message M (block 220), and routes it by transmitting in broadcast mode (block 230).

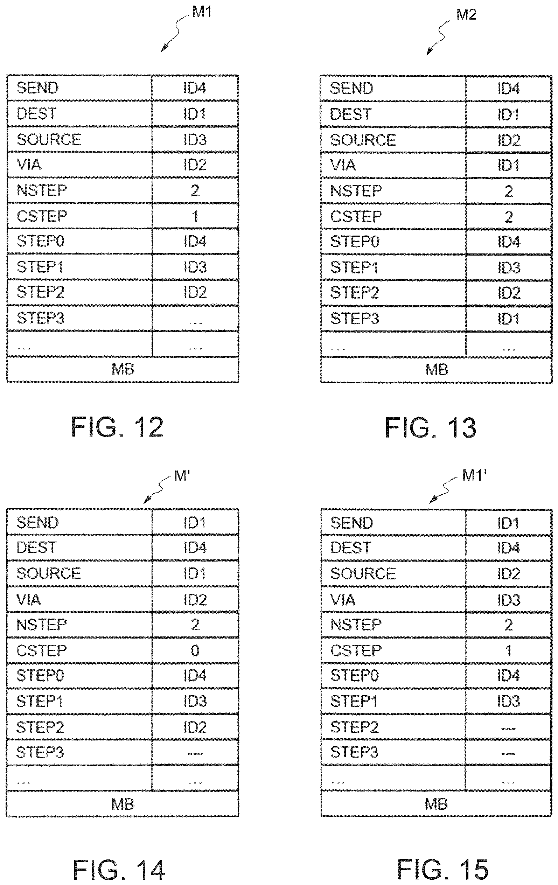

The routed message M1 is built starting from the message M, by changing the contents of the following fields (Figure 12) :
the identifier (ID3 in this case) of the peripheral node 3 operating as a repeater is written in the transmitter field SOURCE;
the content of the routing register 21b of the peripheral node 3 operating as a repeater is written in the routing field VIA (basically, the routing field VIA contains the network identifier IDK of the peripheral node 3 forming the first routing step of the preferential path of the peripheral node 3 operating as a repeater, which is a portion of the preferential path of the sender peripheral node 3);
the content of the current step field CSTEP is incremented by one;
the identifier (ID3 in this case) of the peripheral node 3 operating as a repeater is added to the stack ST in the first of the path step fields STEP0, ..., STEPN-1 which is still free (in this case, the third path step field STEP2).

The body MB1 of the routed message M1 equals the body MB of the message M.

The routed message M1, transmitted in broadcast mode by the peripheral node 3 operating as a repeater for the first routing step, is received by all peripheral nodes 3 in the radio coverage area, including the peripheral node 3 associated to the network identifier ID2. This latter defines the first routing step of the previous repeater peripheral node 3 (ID3) and takes the role of new repeater peripheral node 3, carrying out in turn the routing procedure. The new repeater peripheral node 3 (ID2) generates and sends a message M2, routed as described with reference to Figure 11 and having the content shown in Figure 13. In particular, the network identifier ID2 of the new peripheral node 3 is added to the stack ST in the first of the path step fields STEP0, ..., STEPN-1 which is free (STEP3) and the network identifier IDJ contained in the routing register 21b (the network identifier ID1 of the central node 2) is inserted in the routing field VIA.

The routed message M2 is now received by the central node 2, which recognizes to be the recipient (Figure 9, block 110, output YES) and performs actions in response to the contents of the body MB2 of the message M2 (coinciding with the body MB of the message M).

The reverse routing procedure is carried out when the central node 2 must send a reply message M' to a peripheral node 3 in response to receiving a previous message (for example, the message M2 derived from the message M) by the same peripheral node 3.

The received message M2 contains the necessary routing information for correctly sending of the message M'. Because of the way the message M2 was built in the direct routing procedure, the path step fields STEP0, ..., STEPN-1 which are not empty contain the exact sequence of routing steps corresponding to the preferential path between the sender peripheral node 3 and the central node 2.

The central node 2 (more precisely its processing unit 12) generates the message M' as follows (see also Figure 14):
the content of the path step fields STEP0, ..., STEPN-1 of the message M2 is copied in corresponding path step fields STEP0, ..., STEPN-1 of the message M', with the exception of the field containing the network identifier ID1 of the central node 2 (in this way a stack ST' is formed which contains the identifiers IDK of the peripheral nodes 3 defining a reverse route; the network identifier IDK of the peripheral node 3 which is closest to the central node 2, and must operate as a first repeater - in this case the ID2 - is arranged on top of the stack ST');
the network identifier ID1 of the central node 2 is inserted in the sender field SEND;
the identifier of the recipient peripheral node 3 is inserted in the recipient field DEST (in this case the value ID4);
the network identifier ID1 of the central node 2 is inserted in the transmitter field SOURCE (at this stage, sender node and transmitter node coincide);
the network identifier IDK defining the first element of the stack ST' of routing steps is copied in the routing field VIA (in this case the value ID2);
the content of the step number field NSTEP of the message M2 is copied in the step number field NSTEP of the message M';
an initial value, for example "0", is entered in the current step field CSTEP.

The message M' is transmitted in broadcast mode and received, among others, by the peripheral node 3 defining the first step of the reverse routing path (associated with the network identifier ID2), which operates as a repeater. The processing unit 20 of the repeater peripheral node 3 generates and sends a message M1' derived from the message M' as follows (Figure 15):
the first element of the stack ST' defining the reverse routing path is cleared and the content of the other path step fields STEP0, ..., STEPN-1 of the message M' is copied in the corresponding path step fields STEP0, ..., STEPN-1 of the message M1';
the network identifier ID2 of the peripheral node 3 that operates as a repeater is inserted in the transmitter field SOURCE;
the first element of the stack ST' defining the reverse routing path is inserted in the routing field VIA (in this case the value ID3);
the content of the current step field CSTEP is incremented by one.

The reverse routing procedure is repeated with a new peripheral node 3 which, in turn, operates as a repeater, until the message is received by the recipient peripheral node 3.

Because of the way they are built, the messages M contain the necessary information to define the direct and reverse preferential path between sender node and recipient node (routing step sequence, routing steps number, identifiers of the nodes which, in turn, must be used as repeaters). For a correct routing of the messages with the described communication procedure, it is sufficient that each peripheral node stores a minimum set of information, including its own identifier and the identifier of the node defining the first routing step. For practical reasons, the number of steps needed to reach the central node 2 through the preferential path can be added. In this way, extremely small resources are sufficient to each peripheral node 3 to have full operational functionality, with an obvious benefit in terms of costs and of the possibility of a widespread use.

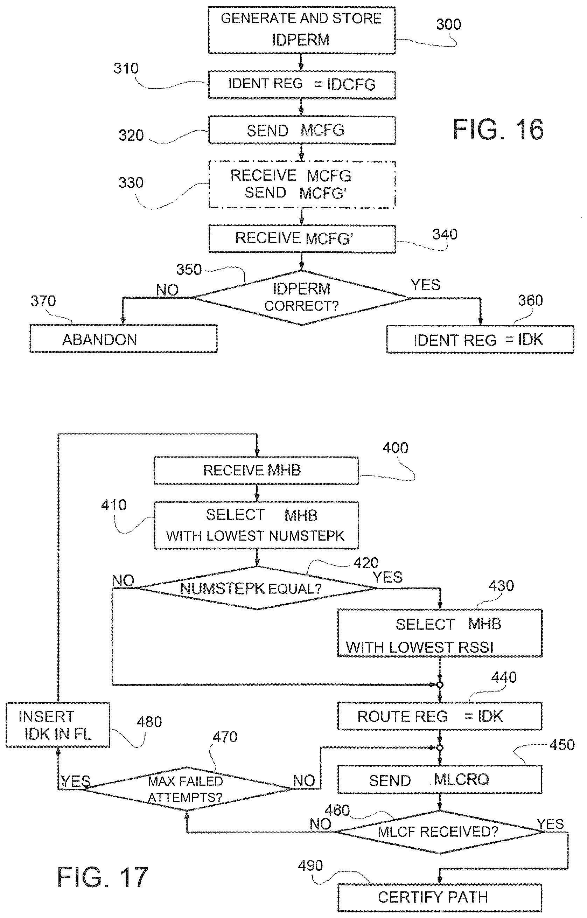

When a new peripheral node 3 is added to the local area network 5, its processing unit 20 performs a configuration procedure, including an initialization procedure and a search procedure of the preferential path to the central node 2, respectively illustrated in Figure 16 and in Figure 17. The configuration procedure is activated following an initialization event, which may be, for example, the first operation of the peripheral node 3 to be configured or the detection of one of the nodes 2, 3 of the local network 5.

With reference to Figure 16, when started, the processing unit 20 generates a permanent identifier IDPERM, which is stored in a portion of non-volatile memory of the memory module 21 (block 300). The permanent identifier IDPERM can be defined, for example, by a random number of 4 bytes.

A configuration identifier IDCFG is then assigned to the identifying register 21a (block 310).

The processing unit 20 then sends a configuration request message MCFG addressed to the central node 2 and containing the permanent identifier IDPERM and the configuration identifier IDCFG in the message body (block 320) .

The configuration request message MCFG is received by the peripheral nodes 3 in the radio coverage area of the peripheral node 3 to be configured, and is forwarded to the central node 2. In response to receiving the configuration request message MCFG, the central node 2 selects a new network identifier IDK, which is inserted, together with the permanent identifier IDPERM, in the body of a configuration response message MCFG' sent to the peripheral node 3 to be configured (block 330, indicated with a dashed and dotted line to indicate that the operations are carried out by the central node 2).

The peripheral node 3 to be configured receives the configuration response message MCFG' (block 340) and, after having verified that the permanent identifier IDPERM matches its own (block 350, output YES), writes the network identifier IDK assigned by the central node 2 in the identifying register 21a (block 360). Otherwise (block 350, output NO), the procedure is abandoned (block 370).

Once the initialization procedure has ended, the added peripheral node 3 carries out the search procedure of the preferential path to the central node 2 (Figure 17). The search procedure of the preferential path is based on heartbeat messages MHB that all three already configured peripheral nodes and the central node 2 periodically send, also in broadcast mode. Each heartbeat message MHB contains, in its body, the network identifier IDK of the respective peripheral node 3 by which it was sent and the content of its step number register 21c, storing the number NUMSTEPK of steps needed to reach the central node 2.

The peripheral node 3 to be configured receives heartbeat messages MHB from all peripheral nodes (possibly from the central node 2) in the radio coverage area (block 400).

The peripheral node 3 to be configured selects the heartbeat message MHB with which the lowest number NUMSTEPK is associated (block 410). If several heartbeat messages MHB contain the same value (namely if the numbers NUMSTEPK of two or more peripheral nodes 3 are equal; block 420, output YES), the processing unit selects (block 430) the heartbeat message MHB associated with the greatest signal power, i.e. the highest level of the parameter RSSI (Received Signal Strength Indicator). Otherwise (block 420, output NO), the only candidate heartbeat message MHB is selected.

The network identifier IDK of the selected heartbeat message MHB is written in the routing register 21b of the peripheral node 3 to be configured (block 440).

The processing unit 20 of the peripheral node 3 to be configured then sends a connection verification request message MLCRQ to the central node 2, using as the first routing node the peripheral node 3 designated by the network identifier IDK of the selected heartbeat message MHB (block 450).

Then (block 460), the peripheral node 3 to be configured waits for a connection confirmation message MLCF from the central node 2. In the absence of a response (block 460, output NO), the processing unit 20 of the peripheral node 3 to be configured sends a new connection verification request message MLCRQ (block 450), if a maximum number of failed attempts has not yet been reached (block 470, output NO), or otherwise (block 470, output YES), it stores the selected identifier IK in a list of false paths FL (block 480) and repeats from the beginning the search procedure of the preferential path (block 400), disregarding the nodes whose identifiers are included in the list of false paths FL.

If the peripheral node 3 to be configured receives the connection confirmation message MLCF (block 460, output NO), the selected preferential path is certified (490) and the search procedure of the preferential path ends.

The peripheral node 3 starts to perform normal system procedures, including the sending of heartbeat messages MH for any new peripheral nodes 3 which have been added later.

The aforesaid procedures of initialization and research of the preferential path allow a rapid configuration of the new peripheral nodes 3 added to the home automation system 1 and the presence of a distributed memory of the topology of the local network 5 and of the preferential paths, locally using minimal resources at each node.

The search procedure of the preferential path can be performed at intervals, regular or not, in time, to update the information relating to the routing of messages and to optimize the communication. For example, the introduction of a new peripheral node 3 may reduce the distance of other peripheral nodes 3 from the central node 2 (in terms of numbers of steps) or may provide a path with a better signal level.

Finally, it is evident that the described home automation system can be subjected to modifications and variations without departing from the scope of the present invention, as defined in the appended claims.

In particular, the information relating to the steps of the preferential path contained in the messages can also be differently arranged, not only in a stack (namely a LIFO list). For instance, a FIFO list or a set of fields can be used, wherein the arrangement is obtained by means of pointers to items in the set.

## Claims

1. A home automation system comprising a plurality of nodes (2, 3) coupled in communication to one another by a wireless connection so as to form a local area network (5) and including a central node (2) configured to be connected to a wide area network (10), and a plurality of peripheral nodes (3), each identified by a respective network identifier (IDK) and configured to operate as senders of direct messages (M, M1, M2) addressed to the central node (2), in a first operating mode, and as repeaters of direct messages (M, M1, M2), in a second operating mode;
wherein:
each peripheral node (3) is connected to the central node (2) either directly or indirectly, through one or more further repeater peripheral nodes (3), functioning in the second operating mode;
each direct message (M, M1, M2) comprises an ordered set (ST) of network identifiers (IDK, IDJ) indicating respective repeater peripheral nodes (3) that define successive steps of a direct preferential path between a sender peripheral node (3), functioning in the first operating mode, and the central node (2);
and each peripheral node (3) in the direct preferential path is configured to route along the direct preferential path received direct messages (M, M1, M2) and to add the respective network identifier (IDK) to the ordered set (ST) of network identifiers (IDK, IDJ) in the routed direct messages (M, M1, M2) ;
**characterized in that** each peripheral node (3) is configured to send a configuration request message (MCFG) to the central node (2), in an initialization mode, and the central node (2) is configured to send a configuration response message (MCFG') addressed to the sender peripheral node (3) of the configuration request message (MCFG), in response to the reception of the configuration request message (MCFG);
each node (2, 3) is configured to send periodically in broadcast mode a heartbeat message (MHB) containing the respective network identifier (IDK) and a respective number of routing steps (NUMSTEPK) to reach the central node (2);
and each peripheral node (3) is configured to receive, in the initialization mode, respective heartbeat messages (MHB) from adjacent nodes (2, 3), to select one among the received heartbeat messages (MHB), on the basis of the respective numbers of routing steps (NUMSTEPK) and of respective signal levels (RSSI), and to send a connection verification request message (MLCRQ) to the central node (2) through the peripheral node (3) indicated by the network identifier (IDK) of the selected heartbeat message (MHB).

2. A home automation system according to claim 1, wherein:
each peripheral node (3) comprises a respective memory element (21b), that contains a network identifier (IDJ) of another node (2, 3) defining a respective first routing step towards the central node (2);
each direct message (M, M1, M2) contains a respective routing field (VIA); and
each peripheral node (3) is configured to enter the content of the respective memory element (21b) in the routing field (VIA) of the routed direct messages (M, M1, M2).

3. A home automation system according to claim 2, wherein each peripheral node (3) is configured to compare the respective network identifier (IDK) with the content of the routing field (VIA) of each received direct message (M, M1, M2) and to route each received direct message (M, M1, M2) selectively if the respective network identifier (IDK) and the content of the routing field (VIA) of each received direct message (M, M1, M2) are equal.

4. A home automation system according to any one of the preceding claims, wherein:
each direct message (M, M1, M2) contains a respective sender field (SEND) and a respective transmitter field (SOURCE); and
each peripheral node (3) is configured to enter the content of the respective first storage element (21a) in the sender field (SEND) of a respective one of the direct messages (M, M1, M2) sent in the first operating mode.

5. A home automation system according to any one of the preceding claims, wherein each direct message (M, M1, M2) contains a respective transmitter field (SOURCE) ; and
each peripheral node (3) is configured to enter the content of the respective first storage element (21a) in the transmitter field (SOURCE) of the respective routed direct messages (M, M1, M2).

6. A home automation system according to any one of the preceding claims, wherein the central node (2) is configured to generate a reply message (M', M1', M2') in response to the reception of one of the direct messages (M, M1, M2).

7. A home automation system according to claim 6, wherein the central node (2) is configured to define an inverse preferential path in the reply message (M', M1', M2') according to the ordered set (ST) of network identifiers (IDK, IDJ) of the corresponding received direct message (M, M1, M2).

8. A home automation system according to claim 7, wherein the peripheral nodes (3) of the inverse preferential path are configured to route the reply message (M', M1', M2') according to the inverse preferential path.

9. A home automation system according to any one of the preceding claims, wherein each peripheral node (3) is configured to generate and store a permanent identifier (IDPERM) in response to an initialization event and to enter the respective permanent identifier (IDPERM) and a configuration identifier (IDCFG) in the configuration request message (MCFG).

10. A home automation system according to claim 9, wherein the central node (2) is configured to generate a network identifier (IDK) in response to the reception of the configuration request message (MCFG) and to enter the generated network identifier (IDK) and the permanent identifier (IDPERM) in the configuration response message (MCFG') and each peripheral node (3) is configured to store the network identifier (IDK) of the configuration response message (MCFG') if the permanent identifier of the configuration response message (MCFG') is equal to the respective stored permanent identifier.

11. A home automation system according to any one of the preceding claims, wherein the nodes (2, 3) are configured to transmit messages in broadcast mode.

12. A home automation system according to any one of the preceding claims, wherein each peripheral node (3) comprises a controlling device (24, 28) configured to be coupled to a respective user appliance (8) and to run commands to determine or detect a state of the respective user appliance (8) in response to direct messages (M, M1, M2) received from the central node (2).

## Patentansprüche

1. Hausautomationssystem mit mehreren Knotenpunkten (2, 3), die durch eine drahtlose Verbindung zur Kommunikation miteinander verbunden sind, um ein lokales Netz (5) zu bilden, und die einen zentralen Knotenpunkt (2) aufweisen, der zur Verbindung mit einem Weitverkehrnetz (10) konfiguriert ist, und mit mehreren peripheren Knotenpunkten (3), von denen jeder durch einen jeweilige Netzidentifikator (IDK) identifiziert ist und derart konfiguriert ist, dass er in einem ersten Betriebsmodus als Sender direkter Meldungen (M, M1, M2), die an den zentralen Knotenpunkt (2) adressiert sind, und in einem zweiten Betriebsmodus als Repeater direkter Meldungen (M, M1, M2) arbeitet;
wobei:
jeder periphere Knotenpunkt (3) durch einen oder mehrere weitere periphere Knotenpunkte (3), die in dem zweiten Betriebsmodus als Repeater funktionieren, direkt oder indirekt mit dem zentralen Knotenpunkt (2) verbunden ist;
jede direkte Meldung (M, M1, M2) einen geordneten Satz (ST) von Netzidentifikatoren (IDK, IDJ) aufweist, die jeweilige als Repeater arbeitende periphere Knotenpunkte (3) angeben, welche aufeinanderfolgende Schritte eines direkten bevorzugten Wegs zwischen einem peripheren Knotenpunkt (3), der in dem ersten Betriebsmodus als Sender funktioniert, und dem zentralen Knotenpunkt (2) definieren;
und jeder periphere Knotenpunkt (3) in dem direkten bevorzugten Weg derart konfiguriert ist, dass er empfangene direkte Meldungen (M, M1, M2) entlang dem direkten bevorzugten Weg leitet und den jeweiligen Netzidentifikator (IDK) dem geordneten Satz (ST) von Netzidentifikatoren (IDK, IDJ) in den geleiteten direkten Meldungen (M, M1, M2) hinzufügt;
**dadurch gekennzeichnet, dass** jeder periphere Knotenpunkt (3) derart konfiguriert ist, dass er in einem Initialisierungsmodus eine Konfigurations-Request-Meldung (MCFG) an den zentralen Knotenpunkt (2) sendet, und der zentrale Knotenpunkt (2) derart konfiguriert ist, dass er als Reaktion auf den Empfang der Konfigurations-Request-Meldung (MCFG) eine Konfiguration-Respons-Meldung (MCFG') sendet, die an den als Sender arbeitenden peripheren Knotenpunkt (3) der Konfigurations-Request-Meldung (MCFG) adressiert ist;
jeder Knotenpunkt (2, 3) derart konfiguriert ist, dass er im Broadcast-Modus periodisch eine Heartbeat-Meldung (MHB) sendet, die den jeweiligen Netzidentifikator (IDK) und eine jeweilige Anzahl von Leitschritten (NUMSTEPK) zum Erreichen des zentralen Knotenpunkts (2) enthält;
und jeder periphere Knotenpunkt (3) derart konfiguriert ist, dass er in dem Initialisierungsmodus jeweilige Heartbeat-Meldungen (MHB) von benachbarten Knotenpunkten (2, 3) empfängt, um auf der Basis der jeweiligen Anzahlen der Leitschritte (NUMSTEPK) und jeweiliger Signalpegel (RSSI) unter den empfangenen Heartbeat-Meldungen (MHB) eine zu wählen und um durch den peripheren Knotenpunkt (3), der von dem Netzidentifikator (IDK) der gewählten Heartbeat-Meldung (MHB) angegeben wird, eine Verbindungsverifizierungs-Request-Meldung (MLCRQ) an den zentralen Knotenpunkt (2) zu senden.

2. Hausautomationssystem nach Anspruch 1, bei dem:
jeder periphere Knotenpunkt (3) ein jeweiliges Speicherelement (21b) aufweist, das einen Netzidentifikator (IDJ) eines weiteren Knotenpunkts (2, 3) enthält, der einen jeweiligen ersten Leitschritt zu dem zentralen Knotenpunkt (2) definiert;
jede direkte Meldung (M, M1, M2) ein jeweiliges Leitfeld (VIA) enthält; und
jeder periphere Knotenpunkt (3) derart konfiguriert ist, dass er den Inhalt des jeweiligen Speicherelements (21b) in das Leitfeld (VIA) der geleiteten direkten Meldungen (M, M1, M2) eingibt.

3. Hausautomationssystem nach Anspruch 2, bei dem jeder periphere Knotenpunkt (3) derart konfiguriert ist, dass er den jeweiligen Netzidentifikator (IDK) mit dem Inhalt des Leitfelds (VIA) jeder empfangenen direkten Meldung (M, M1, M2) vergleicht und jede empfangene direkte Meldung (M, M1, M2) selektiv leitet, falls der jeweilige Netzidentifikator (IDK) und der Inhalt des Leitfelds (VIA) jeder empfangenen direkten Meldung (M, M1, M2) gleich sind.

4. Hausautomationssystem nach einem der vorhergehenden Ansprüche, bei dem:
jede direkte Meldung (M, M1, M2) ein jeweiliges Senderfeld (SEND) und ein jeweiliges Transmitterfeld (SOURCE) enthält; und
jeder periphere Knotenpunkt (3) derart konfiguriert ist, dass er den Inhalt des jeweiligen ersten Speicherelements (21a) in das Senderfeld (SEND) einer jeweiligen der in dem ersten Betriebsmodus gesendeten direkten Meldungen (M, M1, M2) eingibt.

5. Hausautomationssystem nach einem der vorhergehenden Ansprüche, bei dem jede direkte Meldung (M, M1, M2) ein jeweiliges Transmitterfeld (SOURCE) enthält; und
jeder periphere Knotenpunkt (3) derart konfiguriert ist, dass er den Inhalt des jeweiligen ersten Speicherelements (21a) in das Transmitterfeld (SOURCE) der jeweiligen geleiteten direkten Meldungen (M, M1, M2) eingibt.

6. Hausautomationssystem nach einem der vorhergehenden Ansprüche, bei dem der zentrale Knotenpunkt (2) derart konfiguriert ist, dass er als Reaktion auf den Empfang einer der direkten Meldungen (M, M1, M2) eine Antwortmeldung (M', M1', M2') generiert.

7. Hausautomationssystem nach Anspruch 6, bei dem der zentrale Knotenpunkt (2) derart konfiguriert ist, dass er entsprechend dem geordneten Satz (ST) von Netzidentifikatoren (IDK, IDJ) der entsprechenden empfangenen direkten Meldung (M, M1, M2) einen inversen bevorzugten Weg in der Antwortmeldung (M', M1', M2') definiert.

8. Hausautomationssystem nach Anspruch 7, bei dem die peripheren Knotenpunkte (3) des inversen bevorzugten Wegs derart konfiguriert sind, dass sie die Antwortmeldung (M', M1', M2') entsprechend dem inversen bevorzugten Weg leiten.

9. Hausautomationssystem nach einem der vorhergehenden Ansprüche, bei dem jeder periphere Knotenpunkt (3) derart konfiguriert ist, dass er als Reaktion auf ein Initialisierungsereignis einen permanenten Identifikator (IDPERM) generiert und speichert und den jeweiligen permanenten Identifikator (IDPERM) und einen Konfigurationsidentifikator (IDCFG) in die Konfigurations-Request-Meldung (MCFG) eingibt.

10. Hausautomationssystem nach Anspruch 9, bei dem der zentrale Knotenpunkt (2) derart konfiguriert ist, dass er als Reaktion auf die Konfigurations-Request-Meldung (MCFG) einen Netzidentifikator (IDK) generiert und den generierten Netzidentifikator (IDK) und den permanenten Identifikator (IDPERM) in die Konfigurations-Respons-Meldung (MCFG') eingibt, und jeder periphere Knotenpunkt (3) derart konfiguriert ist, dass er den Netzidentifikator (IDK) der Konfigurations-Respons-Meldung (MCFG') speichert, falls der permanente Identifikator der Konfigurations-Respons-Meldung (MCFG') dem jeweiligen gespeicherten permanenten Identifikator gleich ist.

11. Hausautomationssystem nach einem der vorhergehenden Ansprüche, bei dem die Knotenpunkte (2, 3) zum Senden von Meldungen im Broadcast-Modus konfiguriert sind.

12. Hausautomationssystem nach einem der vorhergehenden Ansprüche, bei dem jeder periphere Knotenpunkt (3) eine Steuervorrichtung (24, 28) aufweist, die derart konfiguriert ist, dass sie mit einem jeweiligen Benutzergerät (8) verbunden werden kann und Befehle ausführen kann, um als Reaktion auf von dem zentralen Knotenpunkt (2) her empfangene direkte Meldungen (M, M1, M2) einen Zustand des jeweiligen Benutzergeräts (8) zu bestimmen oder zu detektieren.

## Revendications

1. Système de domotique comprenant une pluralité de noeuds (2, 3) couplés en communication à un autre par une connexion sans fil de manière à former un réseau local (5) et incluant un noeud central (2) configuré pour être connecté à un réseau étendu (10), et une pluralité de noeuds périphériques (3), chacun identifiés par un identificateur de réseau respectif (IDK) et configurés pour fonctionner comme des expéditeurs de messages directs (M, M1, M2) adressés au noeud central (2), dans un premier mode de fonctionnement, et comme des répéteurs de messages directs (M, M1, M2), dans un deuxième mode de fonctionnement ;
dans lequel :
chaque noeud périphérique (3) est connecté au noeud central (2) soit directement soit indirectement, par le biais d'un ou plusieurs autres noeuds périphériques répéteurs (3), fonctionnant dans le deuxième de fonctionnement ;
chaque message direct (M, M1, M2) comprend un ensemble classé (ST) d'identificateurs de réseau (IDK, IDKJ) indiquant des noeuds périphériques répéteurs respectifs (3) qui définissent des pas successifs d'un trajet préférentiel direct entre un noeud périphérique expéditeur (3), fonctionnant dans le premier mode de fonctionnement, et le noeud central (2) ;
et chaque noeud périphérique (3) dans le trajet préférentiel direct est configuré pour router le long du trajet préférentiel direct les messages directs (M, M1, M2) reçus et pour ajouter l'identificateur de réseau respectif (IDK) à l'ensemble classé (ST) d'identificateurs de réseau (IDK, IDJ) dans les messages directs (M, M1, M2) routés ;
**caractérisé en ce que** chaque noeud périphérique (3) est configuré pour envoyer un message de demande de configuration (MCFG) au noeud central (2), dans un mode d'initialisation, et le noeud central (2) est configuré pour envoyer un message de réponse de configuration (MCFG') adressé au noeud périphérique expéditeur (3) du message de demande de configuration (MCFG), en réponse à la réception du message de demande de configuration (MCFG) ;
chaque noeud (2, 3) est configuré pour envoyer périodiquement dans un mode de diffusion un message de pulsation (MHB) contenant l'identificateur de réseau respectif (IDK) et un nombre respectif de pas de routage (NUMSTEPK) pour atteindre le noeud central (2) ;
et chaque noeud périphérique (3) est configuré pour recevoir, dans le mode d'initialisation, des messages de pulsation respectifs (MHB) provenant de noeuds adjacents (2, 3), pour sélectionner un message parmi les messages de pulsation (MHB) reçus, sur la base des nombres respectifs de pas de routage (NUMSTEPK) et de niveaux de signaux respectifs (RSSI), et pour envoyer un message de demande de vérification de connexion (MLCRQ) au noeud central (2) par le biais du noeud périphérique (3) indiqué par l'identificateur de réseau (IDK) du message de pulsation (MHB) sélectionné.

2. Système de domotique selon la revendication 1, dans lequel :
chaque noeud périphérique (3) comprend un élément de mémoire respectif (21b), qui contient un identificateur de réseau (IDJ) d'un autre noeud (2, 3) définissant un premier pas de routage respectif en direction du noeud central (2) ;
chaque message direct (M, M1, M2) contient un champ de routage respectif (VIA) ; et
chaque noeud périphérique (3) est configuré pour entrer le contenu de l'élément de mémoire respectif (21b) dans le champ de routage (VIA) des messages directs (M, M1, M2) routés.

3. Système de domotique selon la revendication 2, dans lequel chaque noeud périphérique (3) est configuré pour comparer l'identificateur de réseau respectif (IDK) avec le contenu du champ de routage (VIA) de chaque message direct (M, M1, M2) reçu et pour router chaque message direct (M, M1, M2) reçu sélectivement si l'identificateur de réseau respectif (IDK) et le contenu du champ de routage (VIA) de chaque message direct (M, M1, M2) reçu sont identiques.

4. Système de domotique selon l'une quelconque des revendications précédentes, dans lequel :
chaque message direct (M, M1, M2) contient un champ d'expéditeur respectif (SEND) et un champ d'émetteur respectif (SOURCE) ; et
chaque noeud périphérique (3) est configuré pour entrer le contenu du premier élément de mémorisation respectif (21a) dans le champ d'expéditeur (SEND) d'un message respectif des messages directs (M, M1, M2) envoyé dans le premier mode de fonctionnement.

5. Système de domotique selon l'une quelconque des revendications précédentes, dans lequel chaque message direct (M, M1, M2) contient un champ d'émetteur respectif (SOURCE) ; et
chaque noeud respectif (3) est configuré pour entrer le contenu du premier élément de mémorisation respectif (21a) dans le champ d'émetteur (SOURCE) des messages directs (M, M1, M2) routés respectifs.

6. Système de domotique selon l'une quelconque des revendications précédentes, dans lequel le noeud central (2) est configuré pour générer un message de réponse (M', M1', M2') en réponse à la réception d'un des messages directs (M, M1, M2).

7. Système de domotique selon la revendication 6, dans lequel le noeud central (2) est configuré pour définir un trajet préférentiel inverse dans le message de réponse (M', M1', M2') en fonction de l'ensemble classé (ST) d'identificateurs de réseau (IDK, IDJ) du message direct (M, M1, M2) reçu correspondant.

8. Système de domotique selon la revendication 7, dans lequel les noeuds périphériques (3) du trajet préférentiel inverse sont configurés pour router le message de réponse (M', M1', M2') en fonction du trajet préférentiel inverse.

9. Système de domotique selon l'une quelconque des revendications précédentes, dans lequel chaque noeud périphérique (3) est configuré pour générer et mémoriser un identificateur permanent (IDPERM) en réponse à un évènement d'initialisation et pour entrer l'identificateur permanent (IDPERM) respectif et un identificateur de configuration (IDCFG) dans le message de demande de configuration (MCFG).

10. Système de domotique selon la revendication 9, dans lequel le noeud central (2) est configuré pour générer un identificateur de réseau (IDK) en réponse à la réception du message de demande de configuration (MCFG) et pour entrer l'identificateur de réseau (IDK) généré et l'identificateur permanent (IDPERM) dans le message de réponse de configuration (MCFG') et chaque noeud périphérique (3) est configuré pour mémoriser l'identificateur de réseau (IDK) du message de réponse de configuration (MCFG') si l'identificateur permanent du message de réponse de configuration (MCFG') est identique à l'identificateur permanent mémorisé respectif.

11. Système de domotique selon l'une quelconque des revendications précédentes, dans lequel les noeuds (2, 3) sont configurés pour transmettre des messages dans un mode de diffusion.

12. Système de domotique selon l'une quelconque des revendications précédentes, dans lequel chaque noeud périphérique (3) comprend un dispositif de commande (24, 28) configuré pour être couplé à un appareil d'utilisateur respectif (8) et pour exécuter des commandes pour déterminer ou détecter un état de l'appareil d'utilisateur respectif (8) en réponse aux messages directs (M, M1, M2) reçus du noeud central (2).
